# EUROPEAN PATENT APPLICATION

(11) **EP 2 525 079 A1**
(43) Date of publication of application: **21.11.2012**
(21) Application number: 11166239.1
(22) Date of filing: 16.05.2011
(51) Int. Cl.: F03D 1/00

(54) **Method for the production of wind turbine tower segments and wind turbine tower**

(71) Applicant: SIEMENS AKTIENGESELLSCHAFT, 80333 München (DE)
(72) Inventor: Heltoft, Lars, 9000, Aalborg (DK); Jensen, Steen Kirkegaard, 8660, Skanderborg (DK); Rasmussen, Anders Nygaard, 2200, Kobenhavn (DK); Stiesdal, Henrik, 5000, Odense C (DK)

(57) **Abstract**

The present invention relates to a method for the production of wind turbine tower segments and a wind turbine tower assembled from tower segment produced by this method.

According to the invention the method for the production of tower segments, which are used to assemble a wind turbine tower, comprises the steps to provide a sheet steel, to cut the sheet steel into a number of steel plates, to cut at least one opening in the number of steel plates and to bend the steel plates into a desired shape.

According to the invention a wind turbine tower comprises the segments being manufactured according to the method invented.

## Description

The present invention relates to a method for the production of wind turbine tower segments and a wind turbine tower assembled from tower segment produced by this method.

It is known to build towers for wind turbines as steel towers. Those towers are constructed with tower segments. The tower segments are manufactured at a production site, which is remote from the wind turbine site.

They are transported to the site where the tower will be erected. They are attached or assembled there to build up the wind turbine tower or an element of this tower.

It is known to build towers for wind turbines as constructions with a mainly circular perimeter, but it is also known to build towers which are polyangular.

US 2008 0256892 describes a wind energy tower with a load-bearing tower wall, which has a circulating outer periphery and consists of a plurality of wall sections, which each one have one centre section and two border section running in the longitudinal direction of the tower, which are provided with a plurality of connection bores, wherein the surface defined by the border sections run along the outer periphery or in a constant distance to the same, and the connection bores are aligned transversely to the outer periphery.

It is also known, to build a wind turbine tower with a diameter or outer dimensions, which vary from the bottom of the tower to the top of the tower. For this type of tower the tower segments used for different heights have different dimensions.

The disadvantage is that the steel plates in different heights of a tower need a different shape and a different processing. This is often done in a manual process which is time- and work-intensive and even expensive.

The aim of the invention is therefore to provide a method for the production of wind turbine towers that allows a quicker production that is less expensive and a wind turbine tower that is assembled quicker and less expensive.

The aim is reached by the features of the independent claims. Preferred embodiments of the invention are described in the dependent claims.

According to the invention the method for the production of tower segments, which are used to assemble a wind turbine tower, comprises the steps to provide a sheet steel, to cut the sheet steel into a number of steel plates, to cut at least one opening in the number of steel plates and to bend the steel plates into a desired shape. Thus all steps necessary to achieve a tower segment of a wind turbine tower in the desired state of production can be performed. Thus individual treatment of each steel plate is possible. Thus steel plates of different shape can be produced in one process. Thus towers with differing dimensions and/or variations in the facilities can be assembled from these tower segments.

According to the invention a wind turbine tower comprises the segments being manufactured according to the method invented.

Preferably the sheet steel is provided in a rolled manner from a coil. Thus the steel is cut in plates with the required length from a long strip of steel. Thus there is less material cut away and left over then with standard sized sheet steel plates. Thus material is saved.

Preferably the sheet steel is provided as a precut sheet steel plate. Thus the width of the sheet steel has the dimension required. Thus there is less material cut away and left over. Thus material is saved.

Preferably the sheet steel is provided as pre-bent steel plate. Thus the plates are at least partially formed in the desired shape before fed into the production process. Thus time and machinery is saved in the production process.

Preferably the steps are performed in a production process. Thus the process requires a minimum of transporting lifting and handling of the steel plates.

Preferably the steps are performed in a continuous process. Thus the steel plates move from one step in the production to the next. Thus no transportation and/or storage is needed for the steel plates between the steps in the process. Thus storage space is saved and time and personnel to transport and store the steel plates is saved.

Preferably the steps are performed in a machine-based process. Thus no manual handling of the plates has to be done. Thus time and personnel is saved.

Preferably the additional step of performing a surface treatment on the steel plates is performed. Thus all steps that have to be performed to the plates to achieve steel plates in the right state to assemble the tower can be performed in one process. Thus no additional treatment is necessary.

Preferably the surface treatment is a sandblasting of the surface, a painting of the surface, a lacquering of the surface, a roughening of the surface, a pre-mounting of equipment, which needs to the connected with the surface, and/or cutting of threads into the surface.

Preferably the step of cutting the sheet steel into a number of steel plates is performed by mechanical cutting means, laser cutting means, plasma cutting means and/or flame cutting means.

Preferably the step of cutting the opening in the steel plates is performed by punching, drilling, laser cutting, plasma cutting, cut bolt-holes, door-openings and/or openings for ventilation or windows. Thus all kind of openings, holes and/or cavities can be added to the steel plates. Thus an individual design for every single steel plate can be performed.

Preferably an additional processing step is performed for shaping the steel plate to achieve a different thickness or width. Thus a different size or thickness of the steel plates can be achieved in comparison to the sheet steel in the beginning of the process. Thus an individual thickness or width of the single steel plates can be achieved.

Preferably a number of bended steel plates are connected to assemble a ring-shaped tower element.

Preferably the connection of the steel plates is done by using the openings for threaded or bolted connections. Thus no additional step to add connecting means is necessary.

The invention is shown in more detail by help of figures.

The figures show preferred configurations and do not limit the scope of the invention.
FIG 1 shows a production process for a wind turbine tower segment according to the invention,
FIG 2 shows a steel plate produced by the method claimed,
FIG 3 shows various shapes of steel plates produced by the method claimed.

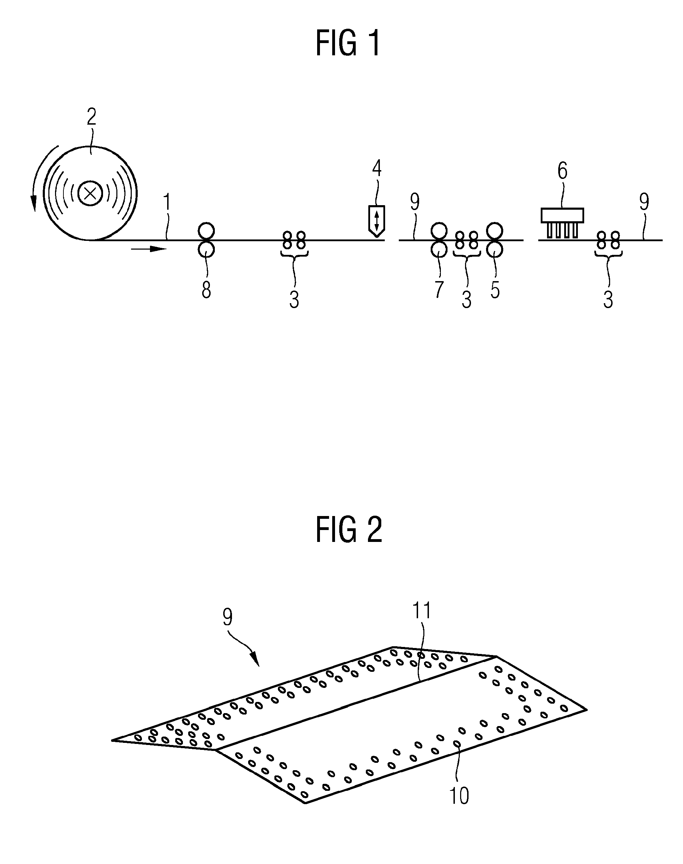

FIG 1 shows a production process for a wind turbine tower segment according to the invention. The sheet steel 1 is provided in a rolled manner on a coil 2. The sheet steel 1 is unrolled and flattened out by the help of rollers 8. The sheet steel 1 is therefore moved forward by driving means 3.

The coil 2 of sheet steel 1 is provided in the right width. One example of such is a width of 2,07 m and with a steel plate thickness of 17,1 mm. To get steel plates 9 with the desired length the sheet steel 1 from the coil 2 is cut by cutting means 4.

The cutting means 4 are means for mechanical cutting, laser cutting, plasma cutting or flame cutting.

In another step in the process the steel plate 9 is processed by surface processing means 7 and rollers 5.

The surface processing means 7 are e.g. means for sandblasting, painting, lacquering, pre-mounting, threads cutting or dimension measurement for quality ensurance.

The rollers 5 are processing means for shaping the steel plate 9 like rolling it, to achieve a different thickness or width, or to form it by bending. The steel plate 9 is moved forward by driving means 3.

Thereafter another step of the production method is shown. In this step the steel plate 9 is also moved forward by driving means 3 and is processed by processing means 6. The processing means 6 are processing means for punching, drilling, laser cutting or plasma cutting to cut holes, door-openings or openings for ventilation or windows.

FIG 2 shows a steel plate 9 produced by the method claimed. After being processed the steel plate 9 show e.g. holes 10 cut into the steel plate 9 or a bend 11 to shape the steel plate 9.

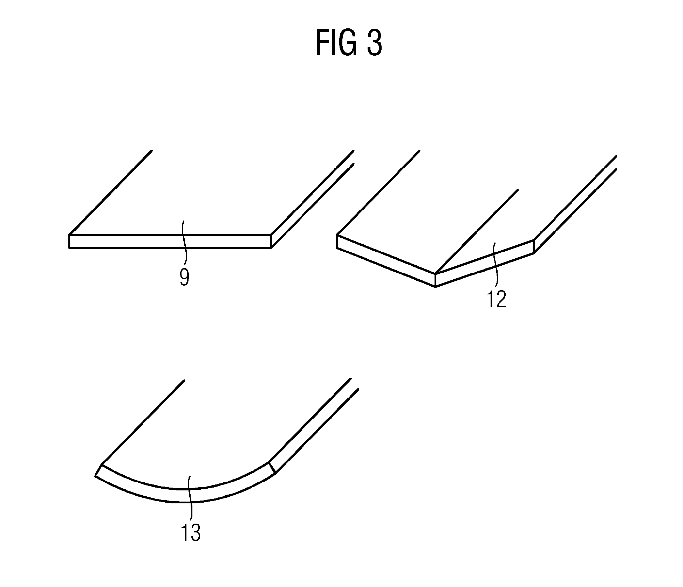

FIG 3 shows various shapes of steel plates 9 produced by the method claimed. After being processed the steel plate 9 might be shaped by being bent 12 to be prepared as a segment for poly-angular tower. The steel plate might also be curved 13 to be prepared as a tower segment for a round or oval tower.

## Claims

1. Method for the production of tower segments, which are used to assemble a wind turbine tower,
comprising the following steps
- provide a sheet steel,
- cut the sheet steel into a number of steel plates,
- cut at least one opening in the number of steel plates,
- bend the steel plates into a desired shape.

2. Method according to claim 1, whereby the sheet steel is provided in a rolled manner from a coil.

3. Method according to claim 1, whereby the sheet steel is provided as a precut sheet steel plate.

4. Method according to claim 3, whereby the sheet steel is provided as pre-bent steel plate.

5. Method according to one of the preceding claims, whereby the steps are performed in a production process.

6. Method according to claim 5, whereby the steps are performed in a continuous process.

7. Method according to one of the claims 5 to 6, whereby the steps are performed in a machine-based process.

8. Method according to one of the preceding claims, with the additional step of performing a surface treatment on the steel plates.

9. Method according to claim 8, whereby the surface treatment is a sandblasting of the surface, a painting of the surface, a lacquering of the surface, a roughening of the surface, a pre-mounting of equipment, which needs to the connected with the surface, and/or cutting of threads into the surface.

10. Method according to one of the preceding claims, whereby the step of cutting the sheet steel into a number of steel plates is performed by mechanical cutting means, laser cutting means, plasma cutting means and/or flame cutting means.

11. Method according to one of the preceding claims, whereby the step of cutting the opening in the steel plates is performed by punching, drilling, laser cutting and/or plasma cutting to cut bolt-holes, door-openings, openings for ventilation and/or windows.

12. Method according to one of the preceding claims, whereby an additional processing step is performed for shaping the steel plate to achieve a different thickness or width.

13. Method according to one of the preceding claims, whereby a number of bended steel plates are connected to assemble a ring-shaped tower element.

14. Method according to one of the preceding claims, whereby the connection of the steel plates is done by using the openings for threaded or bolted connections

15. Wind turbine tower, which comprises a segment being manufactured according to one of the claims 1 - 14.
